# FASCICULE DE BREVET EUROPEEN

(11) **EP 2 033 833 B1**
(45) Date de publication et mention de la délivrance du brevet: **03.07.2019**
(21) Numéro de dépôt: 08163324.0
(22) Date de dépôt: 29.08.2008
(51) Int. Cl.: B60L 7/06, H02P 3/22, H02P 6/24, B60L 7/00

(54) **Dispositif de freinage électrique sécuritaire avec moteur à aimants permanents et régulation du couple de freinage**
Elektrische Sicherheitsbremsvorrichtung mit Dauermagnetmotor und Regulierung des Bremsmoments
Secure electric braking device with permanent magnet motor and braking torque regulation

(30) Priorité: 04.09.2007 FR 0757339
(43) Date de publication de la demande: 11.03.2009
(73) Titulaire: ALSTOM Transport Technologies, 93400 Saint-Ouen (FR)
(72) Inventeur: Jobard, Thierry, 69004, LYON (FR); Bonin, Eric, 38200, JARDIN (FR)
(74) Mandataire: Lavoix

(56) Documents cités:
- EP-A- 1 520 829
- WO-A-03/049256
- GB-A- 1 008 700
- JP-A- 1 133 583

## Description

L'invention se rapporte à un dispositif de freinage électrique sécuritaire avec régulation du couple de freinage destiné à un véhicule à motorisation électrique, par exemple un véhicule ferroviaire.

Un freinage sécuritaire garantit la réalisation de l'effort de freinage souhaité de manière extrêmement fiable.

On distingue dans le domaine ferroviaire principalement deux types de freinage : le freinage de service et le freinage d'urgence.
- Le freinage de service est celui qui est le plus couramment utilisé en exploitation. Il est modulable entre une valeur minimale d'effort proche de 0 et une valeur maximale d'effort. Il peut se décomposer lui-même en plusieurs modes, selon les trains : frein purement électrique, frein purement mécanique ou frein conjugué électrique et mécanique. Il sert à effectuer tous les arrêts et ralentissements « normaux » du train, ainsi que les freinages de maintien dans les pentes. Mais il n'est pas sécuritaire, en ce sens qu'il met en oeuvre un grand nombre de composants électriques, électroniques, mécaniques, pneumatiques ou hydrauliques qui peuvent tomber en panne et donc entraîner un effort de freinage différent de celui souhaité, voire même, avec les nouvelles chaînes de traction à commutation traction / freinage statique, un effort de traction.
- Le freinage d'urgence est utilisé seulement, comme son nom l'indique, en cas d'urgence. Ce cas d'urgence peut être motivé, soit par une situation d'urgence extérieure, soit par une panne du frein de service. Le but de ce frein est d'arrêter le train le plus vite et le plus sûrement possible. Ce frein n'est pas modulable, mais est sécuritaire, c'est-à-dire que sa probabilité de défaillance doit être extrêmement basse. Ce frein doit donc utiliser le moins de composants possible. Généralement il est purement mécanique, mais ceci nécessite un dimensionnement du frein mécanique en conséquence, ce qui peut s'avérer prohibitif en coût ou en masse, notamment sur un train à grande vitesse où les énergies de freinage à dissiper sont importantes. C'est pourquoi il peut être très intéressant de réaliser un freinage électrique de sécurité.

Un dispositif de freinage électrique sécuritaire est décrit dans le brevet réf. DE 101 60 612 A1. L'inconvénient de ce dispositif est que la caractéristique effort / vitesse du freinage électrique de sécurité obtenue ne dépend que des caractéristiques du moteur et de la valeur des résistances de freinage choisie, elle n'est donc pas ajustable, c'est-à-dire qu'elle ne permet pas de s'approcher de la courbe effort / vitesse désirée. Par exemple, elle peut conduire à des efforts excessifs à haute vitesse qui solliciteraient trop l'adhérence ou au contraire à des efforts trop faibles à basse vitesse.

Le dispositif proposé par cette invention a pour but de permettre d'ajuster la caractéristique effort / vitesse de ce frein électrique de sécurité pour la rendre plus cohérente avec l'adhérence disponible en fonction de la vitesse et donc d'obtenir un frein électrique de sécurité plus performant.

Un premier dispositif de ce type est décrit dans la demande de brevet allemande publiée sous DE 10 2004 032 680 A1. Il se rapporte à un freinage comprenant un réseau de résistances de freinage reliées en étoile ou en triangle apte à être couplé à un moteur à aimants permanents à l'aide d'un commutateur de type électromécanique comprenant un ensemble de relais. Il consiste en l'ajout d'un réseau capacitif comprenant trois condensateurs montés en parallèle sur le réseau de résistances de freinage. Ce réseau capacitif permet, en l'absence de contrôle par une régulation active, d'augmenter l'effort de freinage produit par le frein électrique sécuritaire à vitesse élevée en compensant l'énergie réactive produite par les bobinages internes du stator du moteur.

WO 03/049256 A décrit un dispositif de freinage électrique avec régulation du couple de freinage mis en oeuvre dans une génératrice d'éolienne. Le dispositif de freinage comprend un réseau de bobines montées en étoile, chaque bobine étant reliée à une borne d'un enroulement de phase de la génératrice au travers d'un interrupteur différent.

JP 01 133 583 A décrit une chaîne de traction électrique pourvue d'un dispositif de production de couple de freinage se présentant sous la forme d'une résistance ou d'un redresseur débitant dans une résistance, une connexion à la résistance étant commutable par un interrupteur.

L'invention proposée ici concerne un autre dispositif permettant au contraire de limiter l'effort de freinage aux vitesses élevées où l'adhérence est relativement faible, tout en permettant d'avoir un effort de freinage électrique significatif aux vitesses faibles. Elle consiste à ajouter un réseau d'inductances triphasées entre le dispositif résistif de production d'un couple de freinage et le moteur à aimants permanents.

L'invention a pour objet un dispositif de freinage électrique selon la revendication 1.

Suivant des modes particuliers de réalisation, le dispositif de freinage est selon l'une quelconque des revendications 2 à 10.

L'invention sera mieux comprise à la lecture de la description d'une forme de réalisation qui va suivre, donnée uniquement à titre d'exemple et faite en se référant aux dessins sur lesquels :
- la figure 1 est un schéma électrique d'une première forme de réalisation d'un frein électrique sécuritaire intégré dans une chaîne de traction,
- la figure 2 est un schéma électrique d'une variante de la forme de réalisation du frein moteur sécuritaire de la figure 1 dans lequel le dispositif de production de couple de freinage est un réseau de résistances montées en triangle,
- la figure 3 est un schéma électrique d'une variante des formes de réalisation décrites aux figures 1 et 2 du frein moteur sécuritaire dans lequel le dispositif de production de couple de freinage ne comprend qu'une seule résistance, et
- la figure 4 est un schéma électrique d'une variante de réalisation du frein moteur sécuritaire présentant un niveau d'intégration dans la chaîne de traction plus élevé que celui des figures 1 à 3.

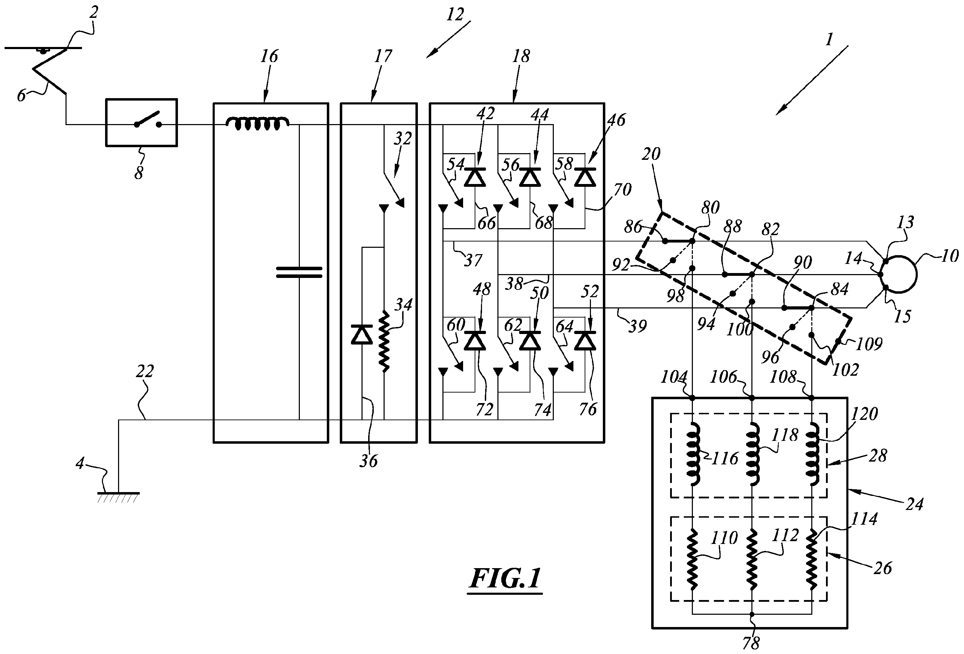

La figure 1 représente un frein moteur électrique sécurisé intégré dans une chaîne de traction électrique 1 d'un véhicule ferroviaire.

La chaîne de traction électrique 1 est alimentée à l'aide d'une ligne caténaire (ou d'un troisième rail) 2 sous haute tension référencée par une masse 4 liée à la terre.

La chaîne de traction électrique 1 comprend en cascade un pantographe (ou un frotteur) 6 de captage de l'énergie électrique depuis la ligne caténaire 2 suivi d'un disjoncteur de ligne 8 servant d'interrupteur / contacteur principal entre la chaîne de traction 1 et la ligne caténaire 2.

La chaîne de traction 1 comprend également une machine électromécanique tournante 10 à excitation permanente apte à être alimentée par un convertisseur électronique de puissance 12.

La machine électromécanique tournante 10 comprend ici un stator avec bobinages à alimentation triphasée pourvu de bornes électriques d'entrée 13, 14, 15 pour chaque phase et un rotor dont l'excitation est fournie par un aimant permanent.

En mode de traction électrique, la machine électromécanique 10 fonctionne en moteur tandis qu'en mode de freinage électrique elle fonctionne en génératrice de tension.

Le convertisseur électronique de puissance 12 comprend en cascade depuis le disjoncteur 8 vers le moteur 10, un filtre de ligne 16 de structure classique LC avec une inductance série et un condensateur monté en parallèle, un hacheur de freinage rhéostatique classique 17 et un onduleur 18, ici à sortie alternative triphasée apte à alimenter la machine tournante 10 au travers d'un commutateur électromécanique 20 de raccordement.

L'ensemble des éléments de la chaîne de traction est raccordé à la masse commune 4 au travers d'une ligne de retour de masse 22.

La chaîne de traction électrique 1 outre son aptitude à fonctionner en chaîne de traction est apte à fonctionner également comme un premier frein électrique, non sécuritaire dit de service.

Le premier frein électrique dit de service comprend les composantes de la chaîne de traction 1, à savoir la génératrice 10, l'onduleur 18 configuré en redresseur, le hacheur de freinage rhéostatique 17, le filtre de ligne 16 et le commutateur électromécanique 20.

Un deuxième frein électrique dit sécuritaire comprend, outre la machine électromécanique 10, le commutateur électromécanique 20 de raccordement et un ensemble régulé de production de couple de freinage 24 comportant un dispositif 26 de production d'un couple de freinage sous la forme d'un réseau résistif de résistances de charge dissipatives et un dispositif 28 de régulation passive de couple de freinage sous la forme d'un réseau d'inductances apte à ajuster le couple de freinage électrique sécuritaire à la puissance maximale de la machine électromécanique et à l'adhérence roue / rail à priori disponible en fonction de la vitesse.

Le hacheur de freinage rhéostatique 17 comprend un interrupteur électronique de puissance 32, de type IGBT (Insulated Gate Bipolar Transistor ou transistor bipolaire à grille isolée) par exemple, connecté en série à une résistance de freinage rhéostatique 34 sur laquelle est branchée en parallèle une diode de roue libre.

L'onduleur 18 comprend trois lignes de sorties alternatives triphasées 37, 38, 39 chacune apte à être connectée respectivement à une borne électrique d'entrée 13, 14, 15 de phase de stator du moteur 10 par une connexion réalisée à l'aide du commutateur électromécanique 20.

L'onduleur 18 est composé d'une structure classique à 6 interrupteurs électroniques de puissance 42, 44, 46, 48, 50, 52 connectés en trois phases raccordées entre la sortie du filtre d'entrée 16 et la ligne de retour 22.

Chaque interrupteur électronique de puissance 42, 44, 46, 48, 50, 52 comprend respectivement un transistor de puissance de type IGBT, par exemple 54, 56, 58, 60, 62, 64, commandable en état passant/non passant pour un courant de puissance, chaque transistor de puissance étant associé à une diode de roue libre 66, 68, 70, 72, 74 et 76 montée en anti-parallèle sur ce dernier.

Ici, sur la figure 1 la flèche de chaque transistor de puissance représente le sens de passage du courant lorsque ce transistor est passant.

Chaque interrupteur de puissance 42, 44, 46 est respectivement associé à un interrupteur de puissance 48, 50, 52, la sortie d'un des premiers étant reliée à l'entrée d'un des seconds et formant une sortie de l'onduleur, chaque sortie étant reliée respectivement à une ligne de sortie de l'onduleur 37, 38, 39.

Les circuits de commande des interrupteurs électroniques de puissance ne sont pas représentés sur la figure 1 et sont supposés aptes à fournir un fonctionnement synchrone de traction à la machine électromécanique 10 en mode moteur.

Le commutateur électromécanique 20 comprend un ensemble de trois plots d'entrée 80, 82, 84 respectivement connectés aux trois bornes d'entrée 13, 14, 15 du moteur 10.

Le commutateur électromécanique 20 comprend également un premier groupe de plots 86, 88, 90 de sortie connectés respectivement aux lignes de sortie 37, 38, 39 de l'onduleur 18.

Le commutateur électromécanique 20 comprend également un deuxième groupe de plots de sortie 92, 94, 96 isolés électriquement, aptes à être connectés respectivement aux plots d'entrée 80, 82, 84 pour isoler le moteur 10 de l'onduleur 18.

Le commutateur électromécanique 20 comprend également un troisième groupe de plots de sortie 98, 100, 102 connectés au dispositif de production de couple de freinage 24 respectivement en des entrées 104, 106, 108.

Le commutateur électromécanique 20 comprend une entrée de commande 109 apte à recevoir une commande de commutation permettant de commuter au choix l'ensemble des liaisons électriques réalisées par des éléments de contact mécaniques, depuis des plots d'entrées 80, 82 et 84 sur des plots de sortie entre le premier groupe de plots de sortie, le deuxième groupe de plots de sortie et le troisième groupe de plots de sortie. Le commutateur électromécanique 20 étant constitué d'éléments passifs en nombre limité est sécuritaire et fiable.

L'ensemble régulé de production de couple de freinage 24 comprend des bornes d'entrée 104, 106, 108 reliées respectivement aux plots de sortie 98, 100, 102 du troisième groupe du commutateur électromécanique 20.

Ici, le réseau résistif 26 formant le dispositif de production d'un couple de freinage est un ensemble de trois résistances 110, 112, 114 reliées selon un schéma en étoile en un noeud commun 78. Chaque résistance 100, 112, 114 du réseau est respectivement connectée à une inductance 116, 118, 120 du réseau inductif 28 formant le dispositif de régulation passive, elle-même connectée à la borne d'entrée 104, 106, 108 associée du troisième groupe de plots de sortie du commutateur électromécanique 20.

En fonctionnement, en mode de traction la machine électromécanique 10 fonctionne en moteur et le commutateur électromécanique 20 est alors configuré de telle sorte que les plots de sorties 86, 88, 90 du premier groupe sont reliés aux plots d'entrée 80, 82, 84. Ainsi l'onduleur 18 alimente le moteur 10 en onde de courant sinusoïdal adapté de manière synchrone à la vitesse du moteur.

Lors d'un freinage de service, le commutateur électromécanique 20 garde le même état que lors de la traction.

L'onduleur 18 est configuré pour fonctionner, en mode redresseur et le hacheur 17 sert à limiter la puissance de freinage renvoyée sur la ligne 6 à la puissance maximale qu'elle peut recevoir, l'éventuel surplus de la puissance de freinage étant dissipé dans la résistance 34.

Lors d'un freinage électrique sécuritaire, le commutateur électromécanique 20 est commuté successivement sur le deuxième groupe 92, 94, 96 puis le troisième groupe de plots de sortie 98, 100, 102 de façon à isoler le moteur 10 du convertisseur de puissance 12, puis à connecter chaque borne 13, 14, 15 de la machine tournante 10 fonctionnant en génératrice au dispositif de production du couple de freinage 24 via les entrées respectives 104, 106 et 108.

La génératrice 10 débite alors un courant par chaque borne électrique 13, 14, 15 dans le réseau résistif 26 de charge formé par les trois résistances 110, 112 et 114.

L'énergie mécanique du véhicule est donc transformée en énergie électrique dans la génératrice 10, puis en chaleur par effet Joule dans le réseau résistif 26, ce qui freine le véhicule.

En l'absence du réseau inductif 28, tandis que la force électromotrice de la machine tournante 10 est proportionnelle à sa vitesse de rotation, les inductances propres du stator induisent une perte de tension également proportionnelle à la vitesse, ce qui a pour effet de diminuer légèrement le couple de freinage fourni en fonction de la vitesse.

Toutefois, cela n'est pas suffisant aux vitesses élevées en raison d'une trop faible valeur des inductances propres du stator.

L'ajout d'une inductance 116, 118, 120, en série avec chaque inductance de phase stator accessible depuis 13, 14, 15, permet d'augmenter la chute de tension proportionnelle à la vitesse de rotation du rotor de la machine électromécanique 10 et ainsi d'ajuster le couple de freinage produit dans une plage de valeurs compatibles avec la puissance maximale du moteur et évitant aux roues d'enrayer tout en sollicitant l'adhérence de façon maximale.

L'adjonction d'inductances comme décrit ci-dessus permet donc de choisir le dispositif de production de couple de freinage 26 avec de faibles valeurs ohmiques de résistances 110, 112, 114 pour obtenir un couple encore important aux vitesses faibles tout en réduisant le couple alors trop élevé qu'on aurait obtenu aux vitesses élevées qui aurait pu faire dépasser la puissance électrique maximale du moteur et risquer des glissements de roue trop importants.

A l'inverse du dispositif décrit dans la demande de brevet DE 10 2004 032 680 A1 qui permet, pour une valeur des résistances 110, 112, 114 donnée, d'augmenter l'effort de freinage à haute vitesse en compensant la chute de tension selfique dans les bobinages du stator du moteur, le dispositif décrit ici dans la figure 1 permet au contraire de limiter cet effort à haute vitesse en fonction de la puissance du moteur et de l'adhérence à priori disponible aux hautes vitesses. Le dispositif décrit ici permet donc de choisir des résistances à faibles valeurs ohmiques pour obtenir un effort de freinage important à faible vitesse sans risquer d'avoir des efforts de freinage trop importants aux vitesses élevées.

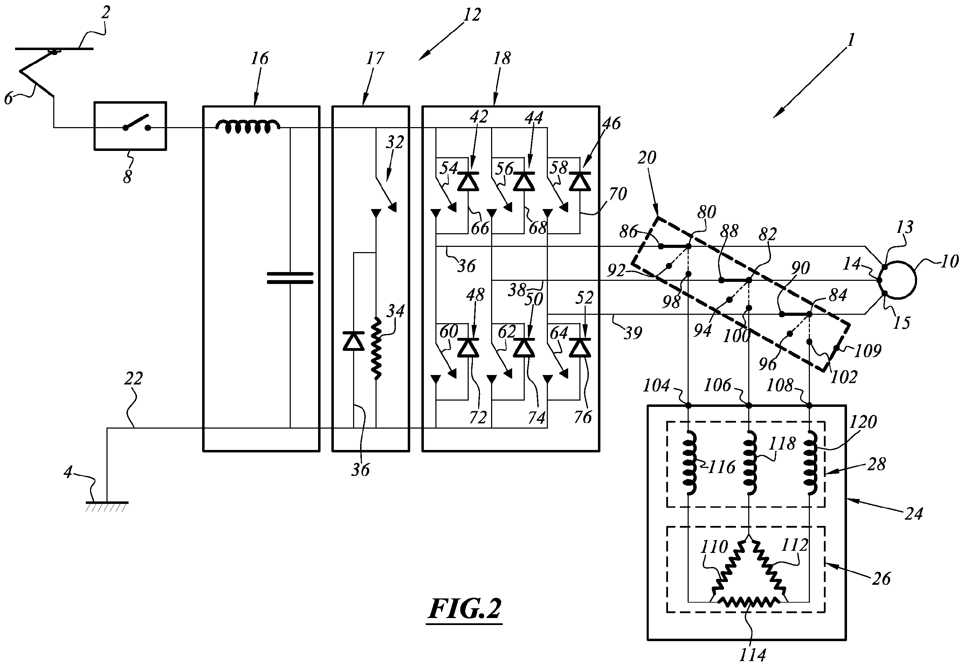

La figure 2 représente une variante du frein électrique sécuritaire de la figure 1 dans laquelle les résistances 104, 106, 108 du réseau résistif 26 sont montées en triangle au lieu d'être montées en étoile comme dans la figure 1.

Pour la figure 2, le fonctionnement du frein électrique sécuritaire est analogue à celui de la figure 1, la charge résistive 26 montée en triangle étant équivalente à une charge résistive montée en étoile.

L'avantage d'un montage en triangle est de permettre de garder les deux tiers de la puissance de freinage en cas de panne simple au lieu de la moitié seulement avec des résistances montées en étoile.

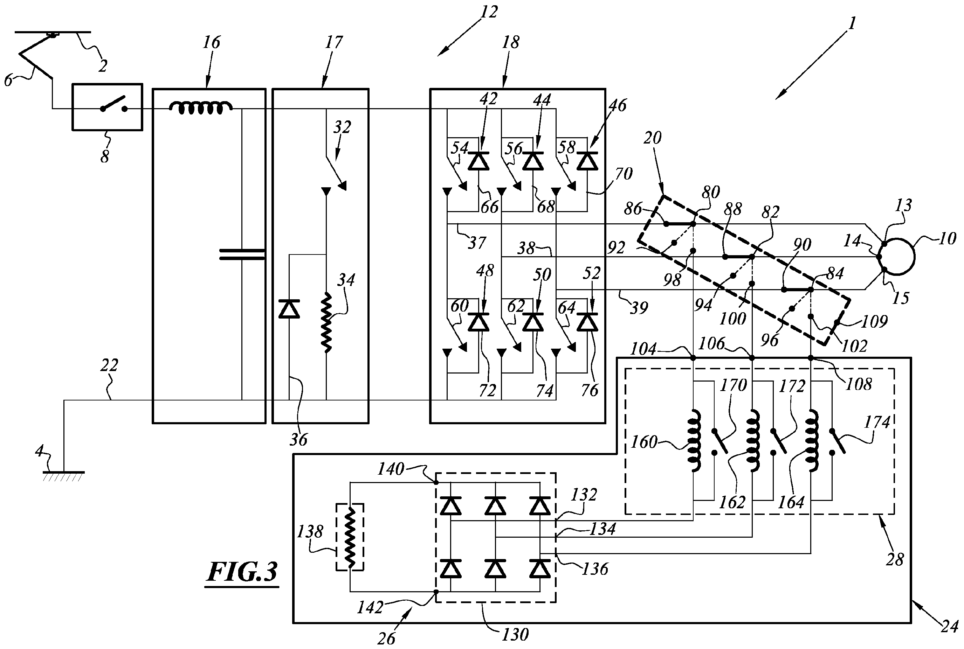

La figure 3 est une variante du frein électrique sécuritaire dans lequel le dispositif de production du couple de freinage 26 ne comporte qu'une seule résistance moyennant l'ajout d'un pont redresseur à diodes.

Le dispositif de production du couple de freinage 26 est formé d'un pont de diodes 130 classique, configuré passivement en pont redresseur, avec trois entrées 132, 134 et 136 aptes à recevoir une alimentation, ici triphasée.

Le dispositif de production du couple de freinage 26 est également formé d'une résistance de charge unique 138, bipolaire, terminale branchée entre deux sorties 140 et 142 du pont de diodes 130. Le pont de diodes 130 est ici composé de six diodes.

Le dispositif de régulation passive 28 comprend un ensemble de trois inductances 160, 162, 164, chacune étant branchée en série respectivement entre l'entrée du pont de diodes 130 référencée 132, 134, 136 et le plot de sortie du troisième groupe de sortie 98, 100, 102 du commutateur électromécanique 20.

Sur chaque inductance 160, 162, 164 est branché respectivement un contacteur 170, 172, 174 permettant à tout moment d'arrêter le freinage d'urgence sans créer de surtensions prohibitives par la fermeture simultanément des contacteurs 174, 176, 178 et l'ouverture immédiatement après des contacteurs du commutateur électromécanique 20.

En fonctionnement, lors du freinage sécuritaire, les contacteurs 170, 172, 174 sont à l'état ouvert.

La génératrice 10 débite un courant pour chaque borne électrique 13, 14, 15 dans le dispositif de production de couple de freinage 26 sur les entrées 132, 134, 136 via le dispositif de régulation passive 28.

Après redressement des courants alternatifs de sortie de la génératrice 10, le pont de diodes redresseur 130, alimente en énergie électrique continue la résistance unique 138 qui dissipe l'énergie électrique sous forme calorifique par effet Joule.

Le fonctionnement de la régulation mis en oeuvre par les inductances 160, 162, 164 est similaire à celui décrit dans les figures 1 et 2.

Dans le cas où l'on souhaite arrêter le freinage sécuritaire à haute vitesse, il faut pouvoir commuter le commutateur 20 dans une position permettant la déconnexion du générateur 10 du dispositif de régulation passive 28.

Or dans ce cas, le courant emmagasiné par les inductances 160, 162, 164 pourrait créer des surtensions inacceptables lors de la commutation électromécanique du commutateur 20.

Afin de faciliter la commutation du commutateur 20, avant la déconnexion des inductances 160, 162, 164 des plots de sorties 98, 100, 102 du commutateur, les contacteurs 170, 172, 174 sont commandés en fermeture.

Ainsi les inductances 160, 162, 164 sont court-circuitées et le courant emmagasiné à l'intérieur de chaque inductance peut circuler librement.

Ensuite, le commutateur 20 déconnecte les plots d'entrée 104, 106 et 108 des inductances 160, 162, 164.

La commutation de 20 étant effectuée, après une durée prédéterminée les contacteurs 170, 172, 174 sont commandés en ouverture.

Ainsi, un fonctionnement de traction ou de freinage de service peut être enclenché et mis en oeuvre de manière analogue à celle décrite aux figures 1 et 2.

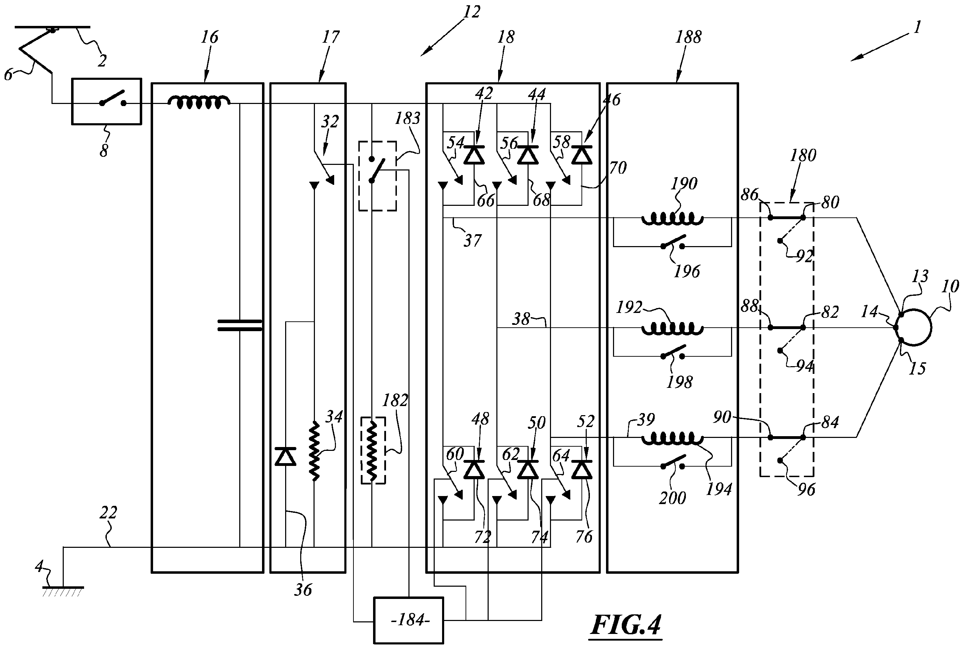

La figure 4 est une vue schématique d'une variante d'un frein électrique sécuritaire des formes de réalisation décrites dans les figures 1, 2 et 3 qui présente une intégration plus élevée avec la chaîne de traction électrique.

La chaîne de traction électrique 1 est analogue à celle décrite à la figure 3 et en diffère en ce que :
- le commutateur électromécanique 20, à trois groupes de plots de sortie, est remplacé par un commutateur électromécanique 180 comportant seulement les premier 86, 88, 90 et deuxième 92, 94, 96 groupes de plots de sortie ;
- le dispositif de production d'un couple de freinage 26 est ici constitué :
   ∘ du pont de diodes de roues libres 66, 68, 70, 72, 74, 76 de l'onduleur 18,
   ∘ d'une résistance de charge 182 connectée en série à un contacteur électromécanique 183, l'ensemble étant branché aux bornes du hacheur 17 et de l'onduleur 18,
   ° de circuits de blocage 184 permettant de bloquer en sécurité les interrupteurs de puissance 54, 56, 58, 60, 62, 64 de l'onduleur 18 et 32 du hacheur 17 et de fermer le contacteur 183.

Le commutateur électromagnétique 180 sert à déconnecter le moteur 10 de l'onduleur 18, en cas de court-circuit de ce dernier. Ce commutateur est alors celui classiquement utilisé dans ce type de chaînes de traction et n'est pas modifié par l'invention.

Le fonctionnement en mode de traction et en mode de freinage de service est identique à celui décrit pour les figures 1, 2 et 3.

Lors d'un freinage électrique sécuritaire, le commutateur électromécanique 180 reste dans l'état où la machine électromécanique 10 est connectée à l'onduleur 18.

Les circuits de blocage 184 commandent les six transistors de puissance 54, 56, 58, 60, 62, 64 de l'onduleur 18 et le transistor de puissance 32 à l'état ouvert.

Parallèlement, les circuits 184 commandent la fermeture du relais électromécanique auxiliaire 183.

Ainsi, l'onduleur de puissance 18 joue ici le rôle d'un simple pont redresseur constitué des diodes 66, 68, 70, 72, 74, 76. Les circuits de blocage 184 empêchent de manière sécuritaire l'onduleur 18 de fonctionner en onduleur.

Ainsi, le pont de diodes de roue libre 66, 68, 70, 72, 74, 76 joue le rôle du pont redresseur 130 de la figure 3 ; il débite l'énergie du générateur 10 dans la résistance de charge 182 alors connectée au pont.

Un dispositif de régulation passive 188 comprend un ensemble d'inductances, ici au nombre de trois 190, 192, 194, chacune étant reliée de part et d'autre à une sortie 37, 38, 39 de l'onduleur 18 et un plot de sortie 86, 88, 90 du premier groupe de plots de sorties du commutateur 180.

En parallèle sur chaque inductance 190, 192, 194 est branché un contacteur 196, 198, 200 permettant à tout moment d'arrêter le freinage d'urgence sans créer de surtensions prohibitives. Pour cela, on ferme simultanément les contacteurs 196, 198, 200 et immédiatement après on ouvre les contacteurs du commutateur électromécanique 180.

Le dispositif 180 d'amélioration de la caractéristique effort / vitesse du freinage électrique sécuritaire fonctionne de la même manière que le dispositif 28 de la figure 3.

L'avantage procuré par le dispositif de régulation est l'adaptation du couple de freinage en fonction de la vitesse pour tenir compte de l'adhérence des roues sur les rails. Cet avantage est appréciable à haute vitesse sachant qu'en l'absence d'un dispositif de régulation, le risque d'enrayage en freinage haute vitesse est élevé.

L'avantage procuré par le dispositif décrit à la figure 4 est son niveau d'intégration élevé dans la chaîne de traction, conduisant à un nombre de composants et un encombrement plus faible.

## Revendications

1. Dispositif de freinage électrique avec régulation du couple de freinage destiné à un véhicule de traction électrique, en particulier un véhicule ferroviaire, comprenant une machine électromécanique tournante (10) ayant au moins un bobinage avec des bornes électriques (13, 14, 15), un dispositif de production de couple de freinage électrique rhéostatique (26) dépourvu d'interrupteurs de puissance actifs, des moyens de commutation (20, 180) aptes à relier sélectivement les bornes électriques (13, 14, 15) de la machine électromécanique (10) au dispositif de production d'un couple de freinage (26),
au moins une inductance de régulation de couple de freinage (116, 118, 120, 160, 162, 164, 190, 192, 194) étant connectée en série entre les moyens de commutation (20, 180) et le dispositif de production du couple de freinage (26),
**caractérisé en ce qu'**aux bornes de chaque inductance (160, 162, 164, 190, 192, 194) est branché un interrupteur de courant (170, 172, 174, 196, 198, 200) d'aide à la commutation des moyens de commutation (20, 180).

2. Dispositif de freinage selon la revendication 1, **caractérisé en ce que** la machine électromécanique (10) est à aimants permanents.

3. Dispositif de freinage selon l'une quelconque des revendications 1 à 2, **caractérisé en ce que** les moyens de commutation (20, 180) sont de type électromécanique.

4. Dispositif de freinage selon l'une quelconque des revendications 1 à 3, **caractérisé en ce que** le dispositif de production de couple de freinage (26) comporte au moins une résistance de freinage (110, 112, 114, 138, 182) connectée aux moyens de commutation (20, 180) au travers d'au moins une inductance de régulation de couple de freinage (116, 118, 120, 160, 162, 164, 190, 192, 194).

5. Dispositif de freinage selon l'une quelconque des revendications 1 à 4, **caractérisé en ce que** le dispositif de production de couple de freinage (26) comprend au moins trois résistances de freinage (110, 112, 114) montées électriquement en étoile.

6. Dispositif selon l'une quelconque des revendications 1 à 4, **caractérisé en ce que** le dispositif de production de couple de freinage (26) comprend trois résistances de freinage (110, 112, 114) montées électriquement en triangle.

7. Dispositif de freinage selon la revendication 4, **caractérisé en ce que** le dispositif de production de couple de freinage (26) comprend un pont redresseur à diodes (130) et une résistance (138) branchée aux bornes de sorties (140, 142) du pont redresseur à diodes.

8. Dispositif de freinage selon la revendication 7, **caractérisé en ce que** les inductances de régulation de couple de freinage (116, 118, 120) sont connectées entre les moyens de commutation (20) et le pont redresseur à diodes (130).

9. Dispositif de freinage selon la revendication 4, **caractérisé en ce que** le dispositif de production de couple de freinage est constitué du pont redresseur formé par les diodes de roue libre (66, 68, 70, 72, 74, 76) d'un onduleur de traction (18) relié aux moyens de commutation (180), d'une résistance de freinage (182) branchée aux bornes de l'onduleur de traction (18), d'un contacteur (183) branché en série avec la résistance de freinage (182) et d'un circuit de blocage (184) permettant d'inhiber en sécurité les interrupteurs électroniques de puissance de l'onduleur de traction (18).

10. Dispositif de freinage selon la revendication 9, **caractérisé en ce que** les inductances de régulation de couple de freinage (190, 192, 194) sont connectées entre les moyens de commutation (180) et l'onduleur de traction (18).

## Patentansprüche

1. Elektrische Bremsvorrichtung mit Bremsmomentregulierung, welche für ein Fahrzeug mit elektrischen Antrieb, insbesondere ein Schienenfahrzeug, bestimmt ist, aufweisend eine rotierende elektromechanische Maschine (10), welche mindestens eine Wicklung mit elektrischen Anschlüssen (13, 14, 15) aufweist, eine elektrische, rheostatische Vorrichtung zum Erzeugen eines Bremsmoments (26), welche frei von aktiven Leistungsschaltern ist, Schaltmittel (20, 180), welche dazu geeignet sind, die elektrischen Anschlüsse (13, 14, 15) der elektromechanischen Maschine (10) mit der Vorrichtung zum Erzeugen eines Bremsmoments (26) selektiv zu verbinden,
wobei mindestens eine Induktivität zur Regulierung des Bremsmoments (116, 118, 120, 160, 162, 164, 190, 192, 194) zwischen den Schaltmitteln (20, 180) und der Vorrichtung zum Erzeugen des Bremsmoments (26) in Reihe geschaltet sind,
**gekennzeichnet dadurch, dass** an die Anschlüsse jeder Induktivität (160, 162, 164, 190, 192, 194) ein Stromschalter (170, 172, 174, 196, 198, 200) zum Unterstützen des Schaltens der Schaltmittel (20, 180) angeschlossen ist.

2. Bremsvorrichtung gemäß dem Anspruch 1, **gekennzeichnet dadurch, dass** die elektromechanische Maschine (10) eine mit Permanentmagneten ist.

3. Bremsvorrichtung gemäß irgendeinem der Ansprüche 1 bis 2, **gekennzeichnet dadurch, dass** die Schaltmittel (20, 180) vom elektromechanischen Typ sind.

4. Bremsvorrichtung gemäß irgendeinem der Ansprüche 1 bis 3, **gekennzeichnet dadurch, dass** die Vorrichtung zum Erzeugen des Bremsmoments (26) mindestens einen Bremswiderstand (110, 112, 114, 138, 182), welcher mit den Schaltmitteln (20, 180) über mindestens eine Induktivität zur Regulierung des Bremsmoments (116, 118, 120, 160, 162, 164, 190, 192, 194) verbunden ist, aufweist.

5. Bremsvorrichtung gemäß irgendeinem der Ansprüche 1 bis 4, **gekennzeichnet dadurch, dass** die Vorrichtung zum Erzeugen des Bremsmoments (26) mindestens drei Bremswiderstände (110, 112, 114) aufweist, welche elektrisch im Stern geschaltet sind.

6. Bremsvorrichtung gemäß irgendeinem der Ansprüche 1 bis 4, **gekennzeichnet dadurch, dass** die Vorrichtung zum Erzeugen des Bremsmoments (26) drei Bremswiderstände (110, 112, 114) aufweist, welche elektrisch im Dreieck geschaltet sind.

7. Bremsvorrichtung gemäß dem Anspruch 4, **gekennzeichnet dadurch, dass** die Vorrichtung zum Erzeugen des Bremsmoments (26) einen Diodenbrückengleichrichter (130) und einen Widerstand (138), welcher an die Ausgangsanschlüsse (140, 142) des Diodenbrückengleichrichters angeschlossen ist, aufweist.

8. Bremsvorrichtung gemäß dem Anspruch 7, **gekennzeichnet dadurch, dass** die Induktivitäten zur Regulierung des Bremsmoments (116, 118, 120) zwischen die Schaltmittel (20) und den Diodenbrückengleichrichter (130) geschaltet sind.

9. Bremsvorrichtung gemäß dem Anspruch 4, **gekennzeichnet dadurch, dass** die Vorrichtung zum Erzeugen des Bremsmoments (26) aus einem Brückengleichrichter, welcher durch Freilaufdioden (66, 68, 70, 72, 74, 76) eines Traktionswechselrichters (18), der mit den Schaltmitteln (180) verbunden ist, gebildet ist, aus einem Bremswiderstand (182), welcher an die Anschlüsse des Traktionswechselrichters (18) angeschlossen ist, aus einem Schütz (183), welches mit dem Bremswiderstand (182) in Serie geschaltet ist, und aus einer Sperrschaltung (184), welche es erlaubt, die elektronischen Leistungsschalter des Traktionswechselrichters (18) sicher zu sperren, gebildet ist.

10. Bremsvorrichtung gemäß dem Anspruch 9, **gekennzeichnet dadurch, dass** die Induktivitäten zur Regulierung des Bremsmoments (116, 118, 120) zwischen die Schaltmittel (180) und den Traktionswechselrichter (18) geschaltet sind.

## Claims

1. Electric braking device with braking torque control, which is intended for an electric traction vehicle, in particular a rail vehicle, comprising a rotating electromechanical machine (10) which has at least one coil with electric terminals (13, 14, 15), a rheostatic electric braking torque production device (26) which has no active power switches, commutation means (20, 180) capable of selectively connecting the electric terminals (13, 14, 15) of the electromechanical machine (10) to the braking torque production device (26),
at least one inductor for controlling braking torque (116, 118, 120, 160, 162, 164, 190, 192, 194) being connected in series between the commutation means (20, 180) and the braking torque production device (26),
**characterised in that** a current switch (170, 172, 174, 196, 198, 200) for assisting the commutation of the commutation means (20, 180) is connected to the terminals of each inductor (160, 162, 164, 190, 192).

2. Braking device according to claim 1, **characterised in that** the electromechanical machine (10) has permanent magnets.

3. Braking device according to any one of claims 1 to 2, **characterised in that** the commutation means (20, 180) are of the electromechanical type.

4. Braking device according to any one of claims 1 to 3, **characterised in that** the braking torque production device (26) comprises at least one brake resistor (110, 112, 114, 138, 182) connected to the commutation means (20, 180) via at least one inductor for controlling braking torque (116, 118, 120, 160, 162, 164, 190, 192, 194).

5. Braking device according to any one of claims 1 to 4, **characterised in that** the braking torque production device (26) comprises at least three brake resistors (110, 112, 114) electrically mounted in the form of a star.

6. Device according to any one of claims 1 to 4, **characterised in that** the braking torque production device (26) comprises three brake resistors (110, 112, 114) electrically mounted in the form of a triangle,

7. Braking device according to claim 4, **characterised in that** the braking torque production device (26) comprises a diode bridge rectifier (130) and a resistor (138) connected to the output terminals (140, 142) of the diode bridge rectifier.

8. Braking device according to claim 7, **characterised in that** the inductors for controlling braking torque (116, 118, 120) are connected between the commutation means (20) and the diode bridge rectifier (130).

9. Braking device according to claim 4, **characterised in that** the braking torque production device is constituted by the bridge rectifier formed by the free wheel diodes (66, 68, 70, 72, 74, 76) of a traction inverter (18) connected to the commutation means (180), by a brake resistor (182) connected to the terminals of the traction inverter (18), by a contactor (183) connected in series to the brake resistor (182) and by a blocking circuit (184) allowing the electronic power switches of the traction inverter (18) to be safely inhibited.

10. Braking device according to claim 9, **characterised in that** the braking torque control inductors (190, 192, 194) are connected between the commutation means (180) and the traction inverter (18).
